# FASCICULE DE BREVET EUROPEEN

(11) **EP 3 701 171 B1**
(45) Date de publication et mention de la délivrance du brevet: **01.12.2021**
(21) Numéro de dépôt: 18800732.2
(22) Date de dépôt: 26.10.2018
(51) Int. Cl.: F16J 15/02, F02K 1/80, B64D 29/00, B64C 7/02, F16J 15/06

(54) **ENSEMBLE PROPULSIF POUR AÉRONEF**
ANTRIEBSEINHEIT FÜR EIN FLUGZEUG
PROPULSION UNIT FOR AIRCRAFT

(30) Priorité: 26.10.2017 FR 1760091
(43) Date de publication de la demande: 02.09.2020
(73) Titulaire: Safran Nacelles, 76700 Gonfreville-l'Orcher (FR)
(72) Inventeur: STUDER, Vincent Joseph Rodolphe, 76700 Gonfreville L'Orcher (FR)
(74) Mandataire: Germain Maureau
(86) Numéro de dépôt international: PCT/FR2018/052660
(87) Numéro de publication internationale: WO 2019/081864

(56) Documents cités:
- EP-A1- 0 753 654
- EP-A1- 3 153 689
- EP-A2- 2 543 864
- FR-A1- 2 914 957
- US-A- 5 332 239
- US-A1- 2015 098 810

## Description

La présente invention se rapporte à un ensemble propulsif pour aéronef comprenant une nacelle de turboréacteur, un pylône et un joint d'étanchéité anti-feu.

Comme cela est connu de l'état de la technique, un ensemble propulsif pour aéronef, comme du type inverseur à flux froid, peut comprendre une nacelle entourant un turboréacteur.

La partie amont de la nacelle a vocation à canaliser l'air vers l'entrée du turboréacteur, et la partie aval de la nacelle permet de rejeter à grande vitesse l'air ayant traversé le turboréacteur, permettant ainsi d'engendrer la poussée nécessaire à la propulsion de l'aéronef.

Une nacelle comporte typiquement un carénage externe définissant le profil aérodynamique externe de la nacelle, et un carénage interne entourant le turboréacteur, l'espace entre ces deux carénages définissant une veine de flux froid de la nacelle.

Le carénage interne, souvent désigné par « structure interne fixe » de la nacelle, ou « IFS », est prolongé dans sa partie aval par une tuyère primaire d'éjection des gaz de combustion, permettant de canaliser la sortie d'air chaud provenant du cœur du turboréacteur.

Dans une architecture typique d'un inverseur à flux froid, la zone moteur située entre le panneau interne IFS de l'inverseur et le moteur, dite zone compartiment cœur, aussi appelé compartiment « core » ou plus communément « core compartment » en langue anglaise, est une zone classée feu. Cette zone est de plus soumise en fonctionnement normal à un environnement thermique sévère, en particulier dans sa partie avale.

Pour assurer la sauvegarde de la voilure et des systèmes tels le pylône reliant l'ensemble propulsif à la voilure, et qui sont situés au-dessus du turboréacteur et de sa nacelle dans le cas d'une installation sous aile, il est nécessaire d'assurer une étanchéité entre la zone « core » et la zone du pylône afin d'éviter toute pénétration de flamme en cas de feu.

Il est connu dans l'état de la technique de disposer à cet effet un joint d'étanchéité en élastomère, communément appelé joint anti-feu ou joint feu ou joint pylône, porté par la structure interne fixe et en appui sur le pylône (ou mât avion).

Ces joints, tels que décrits par exemple dans la demande FR2920215 sont typiquement constitués de plusieurs plis, d'un même ou de plusieurs matériaux selon la tenue désirée et d'élastomère. La formulation de l'élastomère dépend de l'expérience du fournisseur et du cas d'emploi.

Ces joints présentent typiquement une forme de bulle et ont des extensions, ou pieds, pour assurer leur supportage sur la structure.

Le joint pylône sépare donc une zone pylône froide de la zone « core » chaude du turboréacteur.

A titre d'exemple, ces joints sont soumis à des températures de 205°C maximum en exposition long terme, voire de 225°C et de 250°C maximum en exposition court terme.

Cependant, ces températures élevées peuvent entraîner des problèmes de rémanence et de tenue mécanique du joint après exposition prolongée à des températures élevées, et en particulier dans la zone aval de la nacelle. Le joint peut être même fortement endommagé et ne peut donc pas résister longtemps à des températures supérieures à 250°C. Le document EP 2 543 864 A2 décrit un ensemble propulsif pour aéronef, comportant un turboréacteur à double flux ainsi qu'un mât d'accrochage de ce turboréacteur à la voilure ou au fuselage d'un aéronef, ledit mât d'accrochage comprenant un carénage aérodynamique arrière comportant un plancher de protection thermique pour protéger ledit mât d'accrochage de la chaleur d'un flux primaire canalisé par une tuyère d'échappement dudit turboréacteur, ainsi qu'une prise d'air formée dans une paroi aérodynamique longitudinale épousée par un flux secondaire du turboréacteur et délimitant une cavité isolée de ce dernier avec une autre paroi semblable, pour le prélèvement d'un flux d'air de refroidissement dans ledit flux secondaire, et des moyens de circulation d'air alimentés par ladite prise d'air et présentant au moins un orifice de sortie débouchant dans un espace compris entre ledit plancher de protection thermique et ladite tuyère d'échappement.

La présente invention vise à résoudre tout ou partie de ces inconvénients en proposant un ensemble propulsif pour aéronef comprenant un joint d'étanchéité en aval de la nacelle résistant plus longtemps à des températures élevées.

L'invention concerne un ensemble propulsif selon la revendication 1. D'autres caractéristiques optionnelles sont décrites dans les revendications dépendantes 2-9.

L'invention fournit une solution simple et à un coût réduit.

Elle permet d'utiliser les technologies de joints feu connues et matures, sans entraîner de surcoûts pour qualifier de nouveaux types de joints très haute température.

La ventilation est bénéfique à la tenue du joint en fonctionnement nominal mais aussi en cas de feu.

La ventilation participe aussi à la ventilation du turboréacteur en zone compartiment cœur (zone moteur chaude).

D'autres caractéristiques et avantages de la présente invention apparaîtront à la lumière de la description qui va suivre et à l'examen des figures annexées dans lesquelles :
- la figure 1 est une vue en perspective d'un ensemble propulsif pour aéronef comprenant une nacelle de turboréacteur supportée par un pylône ;
- la figure 2 est une vue schématique d'un dispositif de ventilation selon un premier mode de réalisation de l'invention ;
- la figure 3 est une vue en perspective montrant le détail des orifices de ventilation dans le support de joint selon ce mode de réalisation ;
- la figure 4 est une vue schématique d'un dispositif de ventilation selon un deuxième mode de réalisation de l'invention ;
- la figure 5 est une vue schématique d'un dispositif de ventilation selon un troisième mode de réalisation de l'invention ;
- la figure 6 est une vue schématique d'un dispositif de ventilation selon un quatrième mode de réalisation de l'invention ;
- la figure 7 est une vue schématique d'un dispositif de ventilation selon un cinquième mode de réalisation de l'invention.

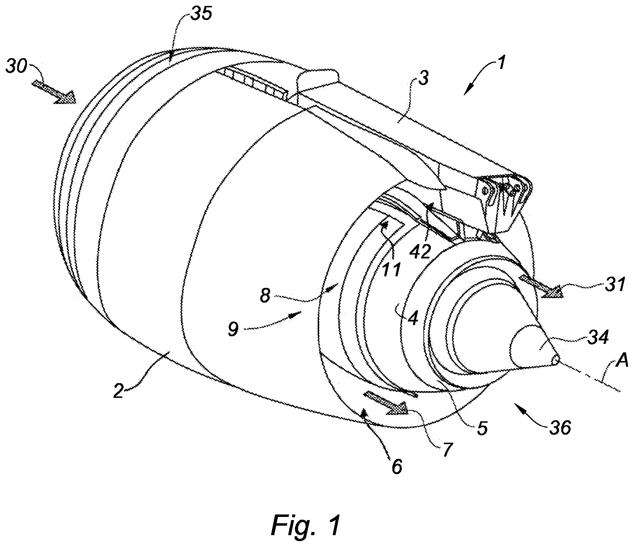

La figure 1 représente une vue en perspective d'un ensemble propulsif 1 pour aéronef comprenant un turboréacteur 8 et une nacelle 2 supportés par un pylône 3 ou mât avion.

L'ensemble propulsif 1 composé du pylône 3, de la nacelle 2 et du turboréacteur 8 est présenté avec un côté amont (ou avant) vers la gauche du dessin et un côté aval (ou arrière) vers la droite du dessin.

L'air représenté par la flèche 30 est aspiré dans l'entrée d'air 35 par la soufflante (non représentée).

L'ensemble propulsif 1 comprend un carénage externe 9 qui peut être un capot et une structure interne fixe 4 délimitant avec le carénage externe 9 un espace annulaire 6. La structure interne fixe 4 se présente sous la forme d'un panneau.

Une partie de l'air propulsé par la soufflante (non représentée) est émis dans l'espace annulaire 6 dans laquelle circule une veine d'air froid 7 (ou veine froide).

La soufflante (non représentée) est entraînée par le cœur du turboréacteur 8 qui comporte un compresseur, une chambre de combustion et une turbine (non représentés).

Les gaz de combustion obtenus par la combustion de carburant et de l'air prélevé en sortie de soufflante sont éjectés après avoir traversé la turbine par une veine chaude représentée par la flèche 31 entre une tuyère primaire d'éjection des gaz 5 et un cône d'éjection des gaz 34.

L'ensemble est construit et installé selon un axe longitudinal A. Le pylône 3 permet la suspension de la nacelle 2 et du turboréacteur 8 à la voilure d'un aéronef (non représenté).

La tuyère primaire d'éjection des gaz 5 de combustion émis par le corps du turboréacteur 8 est positionnée à la partie aval (ou arrière) 36 de la nacelle 2. Le corps du turboréacteur 8 est monté à l'intérieur de la structure interne fixe 4 de nacelle 2.

Un joint d'étanchéité 10 est prévu entre la structure interne fixe 4 et le pylône 3 pour séparer une zone pylône froide 11 d'une zone moteur chaude 12. Le joint d'étanchéité 10 est en compression contre le pylône 3 et plus précisément contre une surface latérale 42 du pylône 3 qui sert de zone d'appui (ou « landing » du joint).

La zone pylône froide 11 est positionnée du côté du pylône 3, contrairement à la zone moteur chaude 12 localisée dans le compartiment de cœur du moteur aussi appelé compartiment « core » dans laquelle la température est élevée.

Le joint d'étanchéité 10, communément appelé joint d'étanchéité anti-feu 10 ou joint pylône, car en compression sur le pylône 3, est chargé de protéger le pylône 3.

Le joint d'étanchéité 10 est positionné sur la longueur du pylône 3 et est particulièrement sollicité en partie arrière du pylône 3.

Par symétrie, l'ensemble propulsif 1 comprend deux structures internes fixes 4 disposées de chaque côté du pylône 3.

L'ensemble propulsif 1 comprend donc au moins deux joints d'étanchéité 10 positionnés de part et d'autres du pylône 3.

Le joint d'étanchéité 10 comprend une partie creuse 19 et deux pieds 33 s'étendant radialement de la partie creuse 19. La partie creuse 19 présente une forme cylindrique dans cet exemple mais peut être de forme différente.

Selon l'invention, l'ensemble propulsif 1 comprend un dispositif de ventilation 13 permettant de dévier une portion d'air froid 14 de la veine d'air froid 7 jusqu'au joint d'étanchéité 10 pour le ventiler et le refroidir.

Cette solution permet de ventiler le joint d'étanchéité 10 ou une portion de joint d'étanchéité 10 soumise à de très hautes températures en fonctionnement normal.

Le dispositif de ventilation 13 est positionné des deux côtés du pylône 3 pour refroidir deux joints d'étanchéité 10 longeant les deux faces latérales 42 respectives du pylône 3.

Le dispositif de ventilation 13 est positionné en priorité en aval de la nacelle. Il peut être positionné sur tout le long du pylône 3. Le dispositif de ventilation 13 peut également être disposé le long d'autres joints d'étanchéité comme ceux positionnés en amont de la structure interne fixe 4.

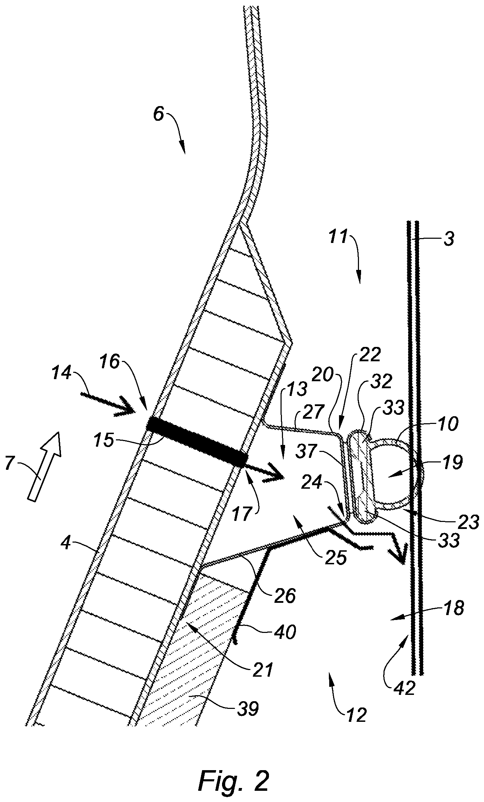

Le dispositif de ventilation 13 comprend au moins un canal de ventilation 15 traversant transversalement la structure interne fixe 4, comme illustré sur les figures 2, 4 à 7.

Le canal de ventilation 15 comprend d'une part une entrée d'air froid 16 débouchant dans la veine d'air froid 7 et une sortie d'air froid 17 débouchant dans un espace de ventilation 18 formé entre la structure interne fixe 4 et le pylône 3, au voisinage du joint d'étanchéité 10. Cet espace de ventilation 18 se situe en partie haute du compartiment « core » du moteur.

L'ensemble propulsif 1 comprend un support de joint 20 positionné dans l'espace de ventilation 18.

Le support de joint 20 présente une forme générale de U dans cet exemple mais peut présenter d'autres formes équivalentes.

Le support de joint 20 comporte une partie inférieure 21 fixée à la structure interne fixe 4, une partie supérieure 22 supportant le joint d'étanchéité 10 et une cavité 25 dans laquelle débouche la sortie d'air froid 17 du canal de ventilation 15.

La cavité 25 s'étend le long de la structure interne fixe 4, dans une direction perpendiculaire au plan de la figure 2.

Le support de joint 20 s'étend suivant une direction X, perpendiculaire au plan de la figure 2.

Le dispositif de ventilation 13 comprend au moins un orifice de ventilation 24 positionné à la partie supérieure 22 du support de joint 20.

La portion d'air froid 14 prélevée dans veine d'air froid 7 circule du canal de ventilation 15 vers la cavité 25 pour ressortir à travers l'orifice de ventilation 24 et ventiler le joint d'étanchéité 10.

La cavité 25 du support de joint 20 est délimitée par une première paroi transversale 26 positionnée du côté de la zone moteur chaude 12, par une deuxième paroi transversale 27 positionnée du côté de la zone pylône froide 11 et par une paroi supérieure 37.

Un matelas thermique 39 est maintenu le long de la structure interne fixe 4, du côté de la zone moteur chaude 12, au moyen d'un élément de maintien 40 fixé au support de joint 20.

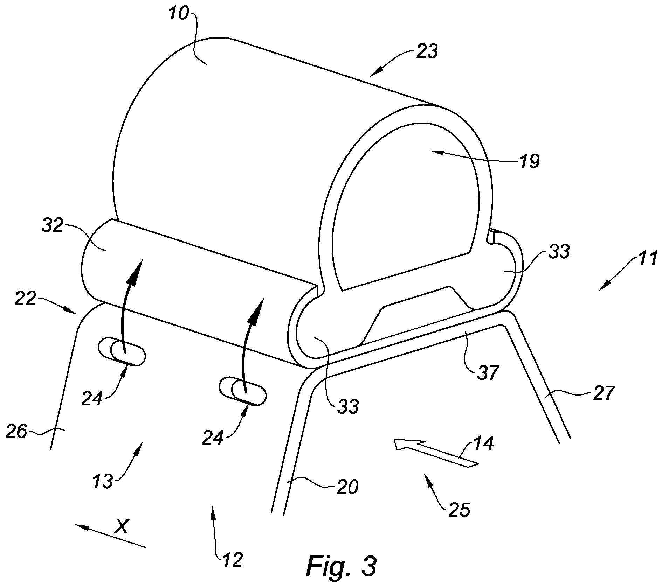

Selon un premier mode de réalisation représenté sur les figures 2 et 3, le ou les orifices de ventilation 24 traversent la première paroi transversale 26 du support de joint 20 de façon à ventiler la surface externe 23 du joint d'étanchéité 10 et à déboucher dans la zone moteur chaude 12.

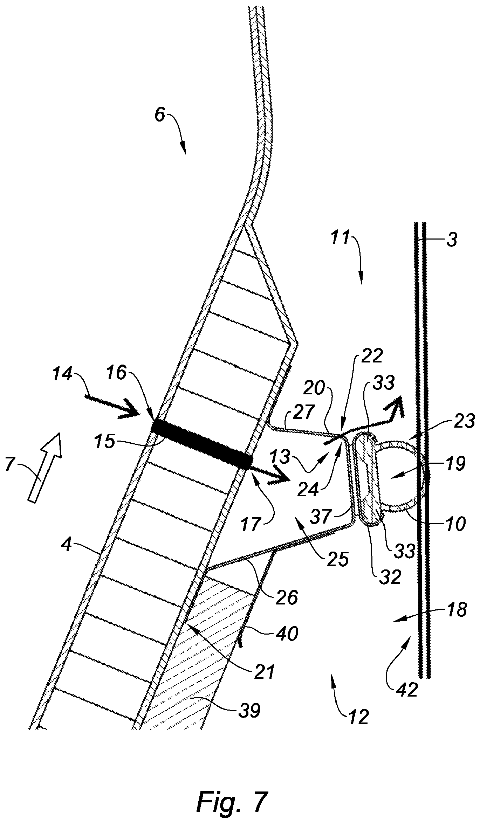

Un autre mode de réalisation est illustré sur la figure 7. Il est possible de placer les points de sortie (orifices de ventilation 24) du côté du pylône 3. Les orifices de ventilation 24 débouchent dans la zone pylône froide 11.

Le ou les orifices de ventilation 24 traversent alors la deuxième paroi transversale 27 du support de joint 20 de façon à ventiler la surface externe 23 du joint d'étanchéité 10 et à déboucher dans la zone pylône froide 11.

Quelques soient ces modes de réalisation, les orifices de ventilation 24 sont de forme oblongue s'étendant selon une direction X dans cet exemple, mais peuvent être de forme différente.

Les orifices de ventilation 24 sont également répartis régulièrement les uns à côté des autres de long de la première paroi transversale 26 ou de la deuxième paroi transversale 27 du support de joint 20 selon cette direction X et à proximité de la paroi supérieure 37 du support de joint 20.

Le joint d'étanchéité 10 est disposé sur la paroi supérieure 37 du support de joint 20.

Le dessous de la paroi supérieure 37 du support de joint 20, à l'intérieur de la cavité 25, et même le support de joint 20, sont également ventilés, refroidissant le joint d'étanchéité 10 par conduction thermique.

Le support de joint 20 est fixé à la structure interne fixe 4 de façon sensiblement étanche.

Cette cavité 25 est avantageusement étanche, en maintenant seulement des points de sortie calibrés (orifices de ventilation 24). Ces points de sortie calibrés peuvent être assimilés à un picolo et sont répartis le long de la portion à protéger.

Le flux d'air ne peut ressortir qu'à travers les orifices de ventilation 24.

Il est ainsi possible de maintenir une surpression dans cette cavité 25 au moyen de la veine d'air froid 7.

En variante, l'air de ventilation peut être rejeté dans la zone pylône froide 11 à travers les orifices de ventilation 24 positionnés sur la deuxième paroi transversale 27 du support de joint 20.

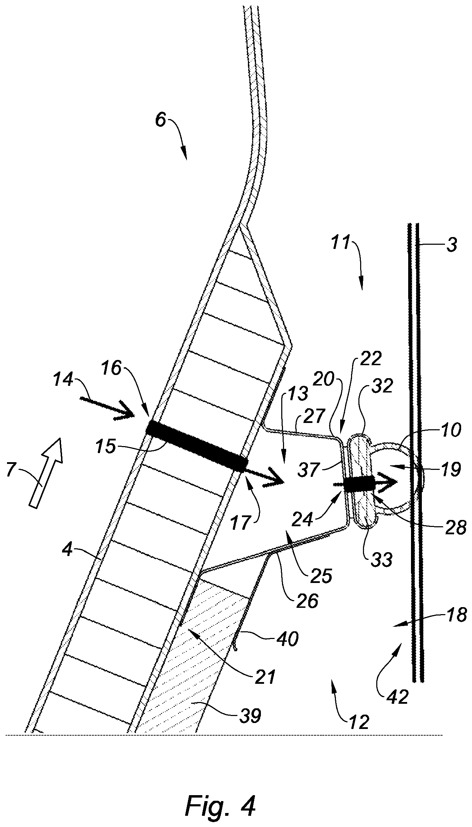

Selon un autre mode de réalisation illustré sur la figure 4, l'orifice de ventilation 24 traverse la paroi supérieure 37 du support de joint 20.

Le joint d'étanchéité 10 comprend un orifice 28 en regard de l'orifice de ventilation 24 de façon à former une communication fluidique entre la cavité 25 et la partie creuse 19 du joint d'étanchéité 10 pour ventiler l'intérieur de ce dernier.

De préférence, la partie creuse 19 du joint d'étanchéité 10 est ventilée par un débit d'air froid suffisant pour pressuriser l'intérieur du joint d'étanchéité 10.

Le dispositif de ventilation 13 peut aussi comprendre au moins une canalisation 29 à l'intérieur de la cavité 25 du support de joint 20 reliant le canal de ventilation 15 à l'orifice de ventilation 24.

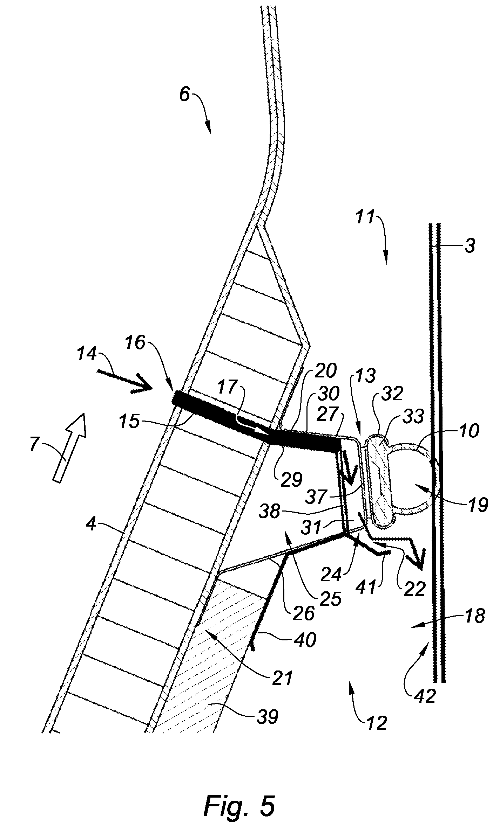

Selon un autre mode de réalisation illustré sur la figure 5, la canalisation 29 est formée d'un canal 30 longeant l'une des parois transversales 26, 27 du support de joint 20 et d'une cavité de support 31 formée sous la paroi supérieure 37 du support de joint 20.

La cavité de support 31 est délimitée par une paroi additionnelle 38 et par la paroi supérieure 37 du support de joint 20.

La cavité de support 31 s'étend le long du support de joint 20 selon la direction X.

Dans cet exemple, les orifices de ventilation 24 traversent la première paroi transversale 26 du support de joint 20 de façon à ventiler la surface externe 23 du joint d'étanchéité 10 et à déboucher dans la zone moteur chaude 12.

Le canal de ventilation 15 est relié au canal 30 du support de joint 20 qui est relié à la cavité de support 31. Ceci permet d'obtenir une cavité de dimensions réduites, augmentant la pression de la portion d'air froid 14 et l'efficacité de la ventilation.

L'élément de maintien 40 permet de canaliser le flux d'air vers la surface externe 23 du joint d'étanchéité 10 en sortie des orifices de ventilation 24.

Plus précisément, l'élément de maintien 40 comprend une protubérance externe 41 positionnée en regard de l'orifice de ventilation 24.

La direction des jets d'air en sortie est choisie de façon à créer un film entre la zone moteur chaude 12 et la bulle du joint d'étanchéité 10.

La paroi supérieure 37 du support de joint 20 comprend un élément de maintien 32 en forme de C dans lequel sont insérés les deux pieds 33 du joint d'étanchéité 10.

La forme en C de l'élément de maintien 32 permet d'obtenir un effet Coanda avec l'arrondi du C et de dirigé le flux d'air vers le joint d'étanchéité 10.

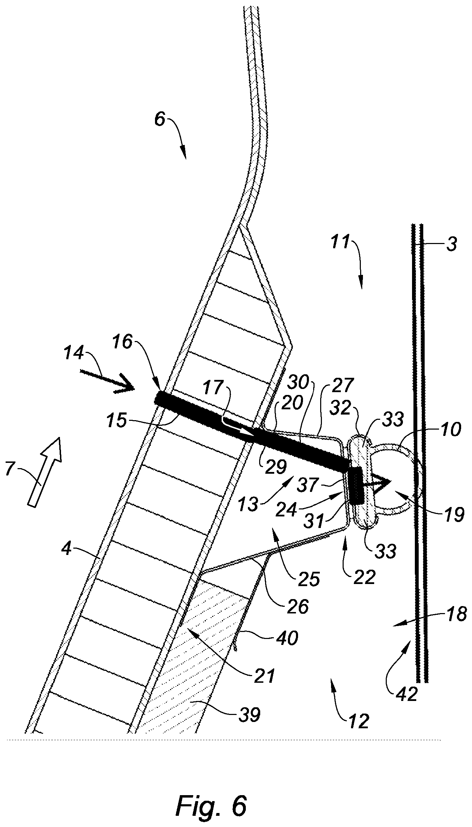

Selon un autre mode de réalisation illustré sur la figure 6, la cavité de support 31 correspond à l'espace formé entre l'élément de maintien 32 en forme de C et la paroi supérieure 37 du support de joint 20. Ceci permet d'obtenir une cavité de dimensions réduites, augmentant la pression de la portion d'air froid 14 et l'efficacité de la ventilation.

Le canal 30 est relié à la cavité de support 31 débouchant à l'intérieur du joint d'étanchéité 10 par au moins un orifice de ventilation 24.

Le canal de ventilation 15 est relié au canal 30 du support de joint 20 qui est relié à la cavité de support 31 débouchant à l'intérieur du joint d'étanchéité 10.

De façon alternative, et selon l'architecture de l'ensemble propulsif, il est possible de mutualiser cette ventilation avec une ventilation pour d'autres pièces, typiquement la ventilation des ferrures « bumper » sur l'IFS.

Dans le cas où l'air de ventilation est rejeté dans la zone moteur chaude 12 (compartiment cœur), ce débit d'air participe à la ventilation globale du moteur.

Selon une autre variante (non représentée), la paroi du pylône 42 comprend localement une protection thermique pour minimiser l'apport thermique par conduction vers la zone d'appui joint.

## Revendications

1. Ensemble propulsif (1) pour aéronef comprenant une nacelle (2) comportant un turboréacteur (8) supportée par un pylône (3), ladite nacelle (2) comprenant :
- un carénage externe (9),
- une structure interne fixe (4) délimitant avec le carénage externe (9) un espace annulaire (6) dans lequel est apte à circuler une veine d'air froid (7), et
- un joint d'étanchéité (10) positionné entre la structure interne fixe (4) et le pylône (3), ledit joint d'étanchéité (10) étant destiné à séparer une zone pylône froide (11) d'une zone moteur chaude (12),
l'ensemble propulsif (1) comprenant:
- un dispositif de ventilation (13) permettant de dévier une portion d'air froid (14) de la veine d'air froid (7) jusqu'au joint d'étanchéité (10) pour le ventiler, le dispositif de ventilation (13) comprenant un canal de ventilation (15) traversant transversalement la structure interne fixe (4), le canal de ventilation (15) comprenant une entrée d'air froid (16) débouchant dans la veine d'air froid (7) et une sortie d'air froid (17) débouchant dans un espace de ventilation (18) formé entre la structure interne fixe (4) et le pylône (3), au voisinage du joint d'étanchéité (10), et
- un support de joint (20) positionné dans l'espace de ventilation (18), le support de joint (20) comportant une partie inférieure (21) fixée à la structure interne fixe (4), une partie supérieure (22) supportant le joint d'étanchéité (10) et une cavité (25) dans laquelle débouche la sortie d'air froid (17) du canal de ventilation (15), le dispositif de ventilation (13) comprenant au moins un orifice de ventilation (24) traversant la partie supérieure (22) du support de joint (20), la portion d'air froid (14) circulant du canal de ventilation (15) vers la cavité (25) pour ressortir à travers l'orifice de ventilation (24).

2. Ensemble propulsif (1) selon la revendication 1, **caractérisé en ce que** le dispositif de ventilation (13) comprend une canalisation (29) à l'intérieur de la cavité (25) du support de joint (20) reliant le canal de ventilation (15) à l'orifice de ventilation (24).

3. Ensemble propulsif (1) selon l'une quelconque des revendications 1 à 2, **caractérisé en ce que** le joint d'étanchéité (10) comprend une partie creuse (19) ventilée par le dispositif de ventilation (13).

4. Ensemble propulsif (1) selon la revendication 3, **caractérisé en ce que** le dispositif de ventilation (13) ventile la partie creuse (19) du joint d'étanchéité (10) par un débit d'air froid adapté pour pressuriser l'intérieur du joint d'étanchéité (10).

5. Ensemble propulsif (1) selon l'une quelconque des revendications 3 ou 4, **caractérisé en ce que** l'orifice de ventilation (24) traverse une paroi supérieure (37) du support de joint (20), ledit joint d'étanchéité (10) comprenant un orifice (28) en regard dudit orifice de ventilation (24) de façon à former une communication fluidique entre la cavité (25) et la partie creuse (19) du joint d'étanchéité (10) pour ventiler l'intérieur de ce dernier.

6. Ensemble propulsif (1) selon l'une quelconque des revendications 2 à 5, **caractérisé en ce que** la canalisation (29) est formée d'un canal (30) longeant l'une des parois transversales (26, 27) du support de joint (20) et d'une cavité de support (31) formée sous la paroi supérieure (37) du support de joint (20), ladite cavité de support (31) étant délimitée par la paroi supérieure (37) du support de joint (20) et par une paroi additionnelle (38).

7. Ensemble propulsif (1) selon l'une quelconque des revendications 2 à 5, **caractérisé en ce que** la paroi supérieure (37) du support de joint (20) supporte un élément de maintien (32) en forme de C dans lequel est inséré deux pieds (33) du joint d'étanchéité (10) s'étendant radialement de la partie creuse (19), la cavité de support (31) correspondant à l'espace formé entre l'élément de maintien (32) et la paroi supérieure (37) du support de joint (20), le canal (30) étant relié à la cavité de support (31) débouchant à l'intérieur du joint d'étanchéité (10) par au moins un orifice de ventilation (24).

8. Ensemble propulsif (1) selon l'une quelconque des revendications 1 à 2, **caractérisé en ce que** le dispositif de ventilation (13) ventile la surface externe (23) du joint d'étanchéité (10).

9. Ensemble propulsif (1) selon la revendication 8, **caractérisé en ce que** l'orifice de ventilation (24) traverse une des parois transversales (26, 27) du support de joint (20) de façon à ventiler la surface externe (23) du joint d'étanchéité (10).

## Patentansprüche

1. Antriebseinheit (1) für ein Flugzeug, umfassend eine Gondel (2), aufweisend einen Turboreaktor (8), die von einem Mast (3) getragen wird, wobei die Gondel (2) umfasst:
- eine äußere Verkleidung (9),
- eine feste innere Struktur (4), die mit der äußeren Verkleidung (9) einen ringförmigen Raum (6) begrenzt, in dem ein Kaltluftstrom (7) zu zirkulieren imstande ist, und
- eine Dichtung (10), die zwischen der festen inneren Struktur (4) und dem Mast (3) positioniert ist, wobei die Dichtung (10) bestimmt ist, eine kalte Mastzone (11) von einer warmen Motorzone (12) zu trennen,
wobei die Antriebseinheit (1) umfasst:
- eine Lüftungsvorrichtung (13), die erlaubt, einen Kaltluftabschnitt (14) des Kaltluftstroms (7) bis zur Dichtung (10) abzulenken, um sie zu belüften, wobei die Lüftungsvorrichtung (13) einen Lüftungskanal (15) umfasst, der die feste innere Struktur (4) transversal durchquert, wobei der Lüftungskanal (15) einen Kaltlufteinlass (16) umfasst, der in den Kaltluftstrom (7) ausmündet, und einen Kaltluftauslass (17), der in einen Lüftungsbereich (18) ausmündet, der zwischen der festen inneren Struktur (4) und dem Mast (3) gebildet ist, in der Nähe der Dichtung (10), und
- einen Dichtungshalter (20), der im Lüftungsbereich (18) positioniert ist, wobei der Dichtungshalter (20) einen unteren Teil (21), der an der festen inneren Struktur (4) befestigt ist, einen oberen Teil (22), der die Dichtung (10) hält und einen Hohlraum (25) aufweist, in den der Kaltluftauslass (17) des Lüftungskanals (15) ausmündet, wobei die Lüftungsvorrichtung (13) mindestens eine Lüftungsöffnung (24) umfasst, die den oberen Teil (22) des Dichtungshalters (20) durchquert, wobei der Kaltluftabschnitt (14) vom Lüftungskanal (15) zum Hohlraum (25) zirkuliert, um durch die Lüftungsöffnung (24) auszutreten.

2. Antriebseinheit (1) nach Anspruch 1, **dadurch gekennzeichnet, dass** die Lüftungsvorrichtung (13) eine Kanalisation (29) im Inneren des Hohlraums (25) des Dichtungshalters (20) umfasst, die den Lüftungskanal (15) mit der Lüftungsöffnung (24) verbindet.

3. Antriebseinheit (1) nach einem der Ansprüche 1 bis 2, **dadurch gekennzeichnet, dass** die Dichtung (10) einen hohlen Teil (19) umfasst, der von der Lüftungsvorrichtung (13) belüftet wird.

4. Antriebseinheit (1) nach Anspruch 3, **dadurch gekennzeichnet, dass** die Lüftungsvorrichtung (13) den hohlen Teil (19) der Dichtung (10) mit einer Kaltluftmenge belüftet, die geeignet ist, das Innere der Dichtung (10) unter Druck zu setzen.

5. Antriebseinheit (1) nach einem der Ansprüche 3 oder 4, **dadurch gekennzeichnet, dass** die Lüftungsöffnung (24) eine obere Wand (37) des Dichtungshalters (20) durchquert, wobei die Dichtung (10) eine Öffnung (28) umfasst, die der Lüftungsöffnung (24) derart zugewandt ist, dass eine Fluidkommunikation zwischen dem Hohlraum (25) und dem hohlen Teil (19) der Dichtung (10) gebildet wird, um das Innere derselben zu belüften.

6. Antriebseinheit (1) nach einem der Ansprüche 2 bis 5, **dadurch gekennzeichnet, dass** die Kanalisation (29) von einem Kanal (30) gebildet ist, der entlang einer der transversalen Wände (26, 27) des Dichtungshalters (20) und eines Halterhohlraums (31) verläuft, der unter der oberen Wand (37) des Dichtungshalters (20) gebildet ist, wobei der Halterhohlraum (31) von der oberen Wand (37) des Dichtungshalters (20) und von einer zusätzlichen Wand (38) begrenzt ist.

7. Antriebseinheit (1) nach einem der Ansprüche 2 bis 5, **dadurch gekennzeichnet, dass** die obere Wand (37) des Dichtungshalters (20) ein C-förmiges Halteelement (32) hält, in das zwei Füße (33) der Dichtung (10) eingesetzt sind, die sich radial vom hohlen Teil (19) erstrecken, wobei der Halterhohlraum (31) dem Raum entspricht, der zwischen dem Halteelement (32) und der oberen Wand (37) des Dichtungshalters (20) gebildet ist, wobei der Kanal (30), der mit dem Halterhohlraum (31) verbunden ist, durch mindestens eine Lüftungsöffnung (24) in das Innere der Dichtung (10) ausmündet.

8. Antriebseinheit (1) nach einem der Ansprüche 1 bis 2, **dadurch gekennzeichnet, dass** die Lüftungsvorrichtung (13) die äußere Oberfläche (23) der Dichtung (10) belüftet.

9. Antriebseinheit (1) nach Anspruch 8, **dadurch gekennzeichnet, dass** die Lüftungsöffnung (24) eine der transversalen Wände (26, 27) des Dichtungshalters (20) derart durchquert, dass die äußere Oberfläche (23) der Dichtung (10) belüftet wird.

## Claims

1. A propulsion unit (1) for an aircraft comprising a nacelle (2) comprising a turbojet engine (8) supported by a pylon (3), said nacelle (2) comprising:
- an outer fairing (9),
- an inner fixed structure (4) delimiting, together with the outer fairing (9), an annular space (6) in which a cold air flow path (7) can circulate, and
- a sealing gasket (10) positioned between the inner fixed structure (4) and the pylon (3), said sealing gasket (10) being intended to separate a cold pylon area (11) from a hot engine area (12),
the propulsion unit (1) comprising:
- a ventilation device (13) allowing diverting a cold air portion (14) from the cold air flow path (7) up to the sealing gasket (10) to ventilate it, the ventilation device (13) comprising a ventilation channel (15) transversely crossing the inner fixed structure (4), the ventilation channel (15) comprising a cold air inlet (16) opening into the cold air flow path (7) and a cold air outlet (17) opening into a ventilation space (18) formed between the inner fixed structure (4) and the pylon (3), in the vicinity of the sealing gasket (10), and
- a gasket support (20) positioned within the ventilation space (18), the gasket support (20) comprising a lower portion (21) fastened to the inner fixed structure (4), an upper portion (22) supporting the sealing gasket (10) and a cavity (25) into which opens the cold air outlet (17) of the ventilation channel (15), the ventilation device (13) comprising at least one ventilation orifice (24) crossing the upper portion (22) of the gasket support (20), the cold air portion (14) circulating from the ventilation channel (15) towards the cavity (25) before coming out through the ventilation orifice (24).

2. The propulsion unit (1) according to claim 1, **characterized in that** the ventilation device (13) comprises a duct (29) inside the cavity (25) of the gasket support (20) connecting the ventilation channel (15) to the ventilation orifice (24).

3. The propulsion unit (1) according to any one of claims 1 to 2, **characterized in that** the sealing gasket (10) comprises a hollow portion (19) ventilated by the ventilation device (13).

4. The propulsion unit (1) according to claim 3, **characterized in that** the ventilation device (13) ventilates the hollow portion (19) of the sealing gasket (10) by a cold air flow adapted to pressurize the inside of the sealing gasket (10).

5. The propulsion unit (1) according to any one of claims 3 or 4, **characterized in that** the ventilation orifice (24) crosses an upper wall (37) of the gasket support (20), said sealing gasket (10) comprising an orifice (28) facing said ventilation orifice (24) so as to form a fluidic communication between the cavity (25) and the hollow portion (19) of the sealing gasket (10) to ventilate the inside of the latter.

6. The propulsion unit (1) according to any one of claims 2 to 5, **characterized in that** the duct (29) is formed by a channel (30) running along any of the transverse walls (26, 27) of the gasket support (20) and by a support cavity (31) formed under the upper wall (37) of the gasket support (20), said support cavity (31) being delimited by the upper wall (37) of the gasket support (20) and by an additional wall (38).

7. The propulsion unit (1) according to any one of claims 2 to 5, **characterized in that** the upper wall (37) of the gasket support (20) supports a C-shaped holding element (32) into which are inserted two feet (33) of the sealing gasket (10) extending radially from the hollow portion (19), the support cavity (31) corresponding to the space formed between the holding element (32) and the upper wall (37) of the gasket support (20), the channel (30) being connected to the support cavity (31) opening inside the sealing gasket (10) by at least one ventilation orifice (24).

8. The propulsion unit (1) according to any one of claims 1 to 2, **characterized in that** the ventilation device (13) ventilates the outer surface (23) of the sealing gasket (10).

9. The propulsion unit (1) according to claim 8, **characterized in that** the ventilation orifice (24) crosses one of the transverse walls (26, 27) of the gasket support (20) so as to ventilate the outer surface (23) of the sealing gasket (10).
